# EUROPEAN PATENT APPLICATION

(11) **EP 4 092 536 A1**
(43) Date of publication of application: **23.11.2022**
(21) Application number: 22174026.9
(22) Date of filing: 18.05.2022
(51) Int. Cl.: G06F 11/22

(54) **TESTING SYSTEM FOR A TOUCHSCREEN DEVICE**

(30) Priority: 19.05.2021 IT 202100012911
(71) Applicant: Leonardo S.p.a., 00195 Roma (IT)
(72) Inventor: FINOCCHI, Andrea, 00071 Pomezia (RM) (IT); LOLLI, Lapo, 00071 Pomezia (RM) (IT)
(74) Representative: Studio Torta S.p.A.

(57) **Abstract**

There is described a testing system (1) for an electronic device (2) including a touchscreen (3); the testing system (1) comprises an arm (4), which is movable between a first position, in which it contacts and activates the touchscreen (3) and a second position, in which it is spaced away from the touchscreen (3); and pneumatic actuation means (5), which are adapted to actuate the arm (4) between the first position and the second position.

## Description

### CROSS-REFERENCE TO RELATED APPLICATIONS

This Patent Application claims priority from Italian Patent Application No. 102021000012911 filed on May 19, 2021.

### TECHNICAL FIELD

The present invention relates to a testing system for an electronic device comprising a touchscreen.

More specifically, the present invention relates to a testing system for touchscreen devices particularly intended for avionic applications.

### BACKGROUND ART

The design process of electronic devices generally includes a qualification stage, during which the compliance of the devices with specific requirements is assessed. By way of example, during the qualification stage the electromagnetic interference and compatibility of the devices are evaluated under different environment conditions and in critical setups.

The testing equipment must be selected carefully, so as to avoid any interference between the equipment and the device under test. Moreover, the testing equipment must meet strict safety standards in order to avoid potential hazards to the personnel carrying out the test.

In particular, during the qualification stage of the electronic devices comprising a touchscreen, the touchscreen is placed in an electromagnetic field and is repeatedly actuated. However, the actuation of the touchscreen should not be performed by an operator. In fact, on the one hand, it has been observed that the presence of the operator tends to perturb the electromagnetic radiation, thereby altering the test results. On the other hand, the electromagnetic radiation used during the test might be harmful to health.

The actuation of the touchscreen cannot even be properly carried out by a further electronic device, such as the robotic arm disclosed in WO-A2-2017051263. In fact, as explained above, the presence of a further electronic device in proximity to the touchscreen under test is likely to interfere with the electromagnetic radiation.

In detail, the robotic arm discloses in WO-A2-2017051263 consists of a stylus which is adapted to move into three dimensional space for emulating various touch based movements on to the touchscreen panels to provide commands to the computing device, and the stylus further comprises a stylus tip. There are one or more than one rotating motor which is adapted to move the stylus in a plane and a linear actuator which moves the stylus in an axis vertical to the plane.

In addition, EP-A1-1884201 discloses a surgical instrument for use in connection with a pneumatically powered tool having a firing mechanism operably supported therein that is movable between an unactuated position and an actuated position. A pneumatically powered drive system operably communicates with the pneumatically powered tool and is configured to selectively apply at least a firing force to the firing mechanism of the pneumatically powered tool of sufficient magnitude to cause the firing mechanism to move from the unactuated position to the actuated position in response to a flow of gas from a source of gas that is fluidically coupled to the pneumatically powered drive system. At least one feedback device communicates with the pneumatically powered drive system for providing feedback concerning at least one of the magnitude of the firing force as the pneumatically powered drive system moves the firing mechanism from the unactuated to actuated position and a relative position of the firing mechanism as the firing mechanism is moved between the unactuated and actuated positions.

US-A1-2012280934 discloses an apparatus for testing a touch panel including a robot hand that is to be positioned over a touch panel under test. The robot hand moves toward and away from the touch panel. A first testing finger and a second testing finger are coupled to the robot hand. As the robot hand moves toward the touch panel, the first testing finger is to contact the touch panel to simulate a one finger touch, and the second testing finger is to subsequently contact the touch panel to simulate a two finger touch.

Therefore, there is awareness in the industry of the need for a testing system that can be safely used to validate the electronic devices comprising a touchscreen, while minimizing electromagnetic interference with the electronic devices under test.

### DISCLOSURE OF INVENTION

It is an object of the present invention to obtain a testing system that satisfies the aforementioned need in a simple and cost-effective manner.

The aforesaid object is achieved by the present invention, in so far as it relates to a testing system according to claim 1.

### BRIEF DESCRIPTION OF THE DRAWINGS

For a better understanding of the present invention, a preferred embodiment is described hereinafter, by way of a non-limitative example and with reference to the accompanying drawings, in which:
- Figures 1 and 2 show a testing system according to the present invention in two respective operative positions and with some parts not shown for the sake of clarity; and
- Figure 3 is a functional diagram of the testing system of Figures 1 and 2 with some parts not shown for the sake of clarity.

### BEST MODE FOR CARRYING OUT THE INVENTION

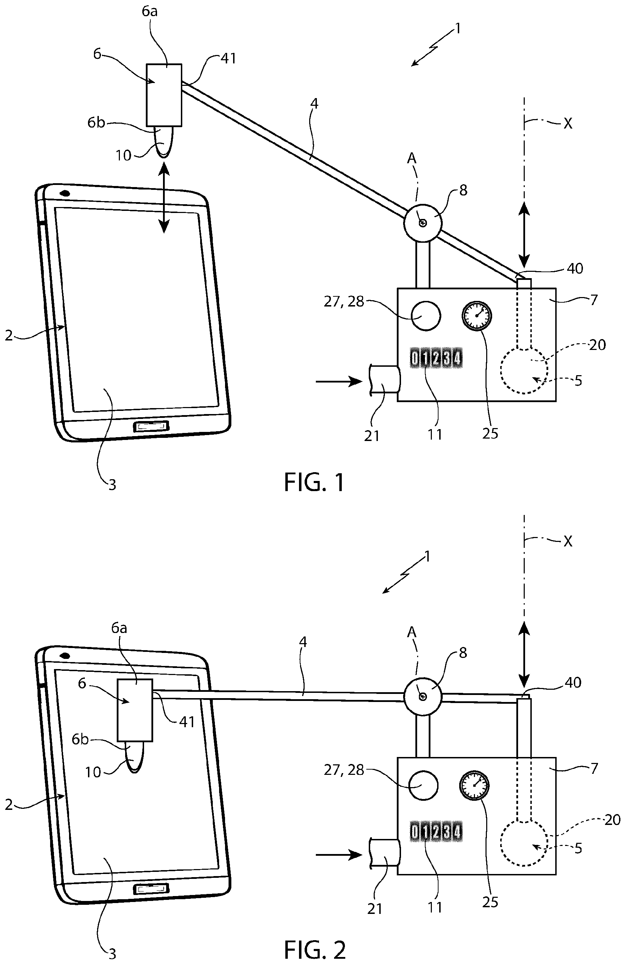

Referring to Figure 1, reference numeral 1 indicates a testing system for an electronic device 2 comprising a touchscreen 3 and particularly but not exclusively intended for avionic applications. By way of example, electronic device 2 is adapted to be included in the cockpit interface of an aircraft.

As illustrated in Figures 1 and 2, testing system 1 is adapted to be placed in proximity to touchscreen 3 in order to repeatedly actuate it during qualification testing of electronic device 2. The qualification tests may include, for example, electromagnetic interference testing (EMI), electromagnetic compatibility testing (EMC) or electromagnetic susceptibility tests.

In detail, touchscreen 3 is an input device comprising an active surface and adapted to receive an input signal as a consequence of a pressure exerted on at least part of the active surface. Alternatively, touchscreen 3 is an input/output device, which is adapted to receive the aforementioned input signal and to display an output signal.

The functioning of touchscreen 3 is based on any known touch sensor technologies (by way of example, PCAP, resistive, capacitive, optical).

In addition, touchscreen 3 may be programmed to be activated only if the pressure exerted on the active surface is higher than a pressure threshold, and/or if the pressure is exerted over a contact area greater than an area threshold, and/or if the pressure is exerted for a time interval greater than a time interval threshold. This prevents touchscreen 3 from being activated, in use, due to accidental contact.

Testing system 1 comprises an arm 4, which is movable between a first position, in which it is adapted to contact touchscreen 3 (Figure 2) and a second position, in which it is adapted to be spaced away from touchscreen 3 (Figure 1).

Advantageously, testing system 1 further comprises pneumatic actuation means 5, which are adapted to actuate arm 4 between the first and the second positions.

When arm 4 is in the first position, it exerts a pressure on touchscreen 3, and in particular on the active surface of touchscreen 3, such that touchscreen 3 is actuated.

Testing system 1 further comprises a case 7 at least partially housing pneumatic actuation means 5 and a pivot 8, which is fixed to case 7 and defines a rotation axis A. Preferably, case 7 is made of a conductive material, e.g. aluminum.

In addition, arm 4 comprises two opposite ends 40, 41 and is hinged to case 7 at pivot 8. Therefore, arm 4 is rotatable between the first and second positions about rotation axis A. As shown in Figures 1 and 2, arm 4 is operatively connected to pneumatic actuation means 5 at end 40 and is hinged at pivot 8 at an intermediate position between ends 40 and 41.

Preferably, arm 4 is a telescopic arm, i.e. the distance between ends 40 and 41 is adjustable. Accordingly, different regions of touchscreen 3 can be contacted by adjusting arm 4 and without any variation in the relative position between case 7 and electronic device 2.

In addition, arm 4 is made of a dielectric material. By way of example, the dielectric material is plastic.

Arm 4 comprises, in turn, an actuation tip 6, which is integral with arm 4 and is adapted to contact touchscreen 3 when arm 4 is in the first position (Figure 2).

Actuation tip 6 is adapted to exert on touchscreen 3 a pressure higher than the pressure threshold. This pressure depends on an actuation force exerted by actuation tip 6 on touchscreen 3 and a contact area defined by actuation tip 6 on touchscreen 3. Such actuation force is a contact force and corresponds, preferably, to a medium human finger pressure. Even more preferably, the actuation force exerted by actuation tip 6 on the active surface of touchscreen 3 ranges from 100 g to 150 g (9.80665 x 10⁻¹ N to 1.47099 N).

In particular, actuation tip 6 is fixed at end 41 of arm 4. In addition, preferably, actuation tip 6 is removably attached to end 41. In this way, where necessary, an actuation tip 6 compatible with the specific touch sensor technology used by touchscreen 3 can be mounted on arm 4. In addition, actuation tips 6 having different dimensions and defining respective different contact areas with touchscreen 3 may be removably attached to arm 4.

In detail, actuation tip 6 comprises a first portion 6a, at which it is attached to end 41 and a second portion 6b, which is jointed to first portion 6a and arranged, during operation, in such a way as to face touchscreen 3. Second portion 6b is substantially conical and comprises a rounded tip on the side opposite to first portion 6a. In addition, second portion 6b is shaped like a fingertip.

According to an alternative embodiment, actuation tip 6 is permanently attached to arm 4 or is formed as a single piece with arm 4 and comprises an interchangeable covering 10. In detail, interchangeable covering 10 may be provided in different sizes so as to define different contact areas and/or may be compatible with different technologies used by touchscreen 3.

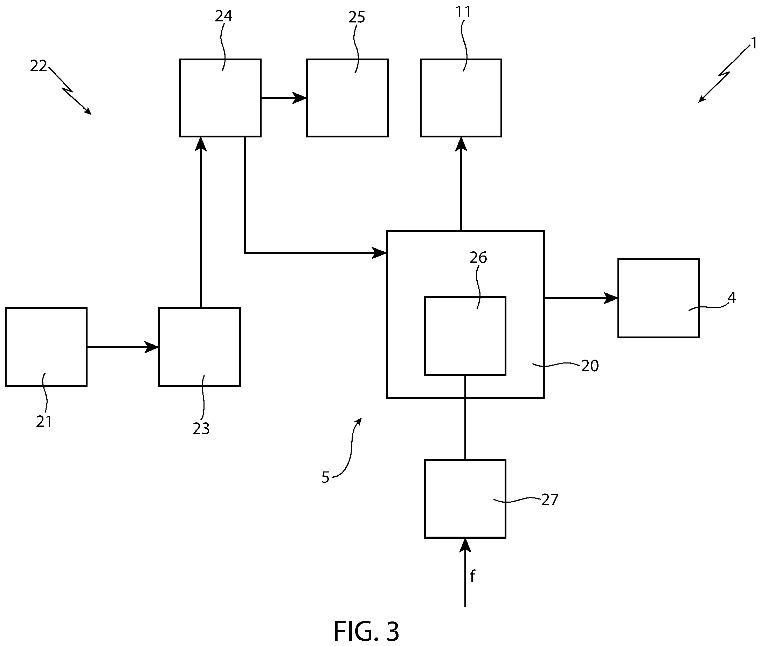

As schematically illustrated in Figure 3, pneumatic actuation means 5 comprise at least one pneumatic actuator 20 and a source 21 of compressed air fluidly connected with pneumatic actuator 20.

In detail, pneumatic actuator 20 is a linear pneumatic actuator comprising a cylinder and a stem adapted to slide within the cylinder between a retracted position (Figure 1) and an extended position (Figure 2) as a function of the compressed air supplied to the cylinder.

In further detail, when pneumatic actuator 20 is in the retracted position, it has a first extension along a direction X transversal to axis A (Figure 1); when pneumatic actuator 20 is in the extended position, it has a second extension along direction X that is greater than the first extension (Figure 2).

End 40 of arm 4 is operatively connected to pneumatic actuator 20. In addition, when pneumatic actuator 20 is in the retracted position, end 40 is closer to case 7 and arm 4 is the second position (Figure 1); when pneumatic actuator 20 is in the extended position, end 40 is further away from case 7 and arm 4 is in the first position (Figure 2).

With reference to Figures 1 and 2, the actuation of arm 4 by means of pneumatic actuator 20 from the second position to the first position corresponds to an anti-clockwise rotation of arm 4 about axis A.

The cylinder of pneumatic actuator 20 is a double-acting cylinder. Alternatively, the cylinder of pneumatic actuator 20 is a single-acting cylinder and testing system 1 comprises elastic means, not shown, adapted to bias arm 4 towards the second position.

In detail, the elastic means comprise a calibrated spring having specific elastic properties. In greater detail, the entity of the actuation force exerted by arm 4 on touchscreen 3 depends on the elastic properties of the calibrated spring.

Pneumatic actuation means 5 further comprise valve means 22, which are adapted to regulate and/or control the flow of compressed air from source 21 towards pneumatic actuator 20. In detail, as shown in figure 3, valve means 22 comprise an input valve 23, which is fluidly connected to source 21 and a pressure controller 24, which is fluidly interposed between input valve 23 and pneumatic actuator 20.

In detail, input valve 23 is configured to selectively allow or deny the flow of compressed air from source 21 towards pneumatic actuator 20. In addition, pressure controller 24 is configured to adjust the rate of compressed air directed toward pneumatic actuator 20, so as to prevent damages to pneumatic actuator 20.

Furthermore, pneumatic actuation means 5 comprise a switch 26, in particular a micro-switch, which is adapted to control the actuation of arm 4 by means of pressure actuator 20. In detail, switch 26 is programmed to regulate over time the supply of compressed air from source 21 to pneumatic actuator 20 so as to control the movement of pneumatic actuator 20 between the extended and the retracted positions and correspondingly the movement of arm 4 between the first and the second positions.

Switch 26 can be programmed to vary a contact frequency f with which arm 4 moves from the second position to the first position and/or vice versa in a given time interval. To this end, testing system 1 comprises a frequency adjustment device 27, which is operatively connected to switch 26 and operable to set a desired value of contact frequency f. In detail, switch 26 is adapted to vary contact frequency f as a result of the desired value of contact frequency f set by means of frequency adjustment device 27 (Figure 3).

In the embodiment shown, frequency adjustment device 27 comprises a knob 28 arranged at case 7 (Figures 1 and 2). Knob 28 is rotatable about an axis of its own with respect to a graduated scale in order to set the desired value of contact frequency f.

Preferably, pneumatic actuation means 5 comprise a pressure indicator 25, which is adapted to display the pressure value of compressed air flowing from source 21 towards pneumatic actuator 20. In addition, pressure indicator 25 is operatively connected to pressure controller 24 and, even more preferably, it is an analogic pressure indicator.

As shown in Figure 3, testing system 1 further comprises a counter 11, which is adapted to store and/or display the number of times arm 4 switches from the first position to the second position and/or vice versa.

In particular, counter 11 is a mechanical counter, i.e. it is a passive counter operating without electricity.

In the embodiment shown, counter 11 is operatively connected to pneumatic actuator 20 (Figure 3).

The operation of testing system 1 is described starting from a condition in which case 7 is arranged close to touchscreen 3, pneumatic actuator 20 is in the retracted position and arm 4 is in the second position (Figure 1).

In addition, environment conditions and setups compatible with the execution of the qualification tests are established, case 7 is electrically linked with the ground and the desired value of contact frequency f is set by means of frequency adjustment device 27.

When source 21 supplies compressed air to pneumatic actuator 20, pneumatic actuator 20 moves from the retracted position to the extended position. Since the extension of pneumatic actuator 20 along direction X varies from the first extension to the second extension and end 40 is operatively connected to pneumatic actuator 20, arm 4 rotates anti-clockwise about axis A toward the first position (Figure 2).

When arm 4 is in the first position, actuation tip 6 contacts touchscreen 3, exerting the actuation force and defining the contact area with touchscreen 3. The pressure exerted by actuation tip 6 on touchscreen 3 activates touchscreen 3.

During the rotation of arm 4 between the first and the second positions, the pressure value of compressed air flowing from source 21 towards pressure actuator 20 can be adjusted by valve means 22 and is displayed by pressure indicator 25.

Various regions of touchscreen 3 can be contacted by arm 4 by manually adjusting the length of arm 4, i.e. the distance between ends 40 and 41.

In addition, the contact frequency f of arm 4 can be varied by means of knob 28 of frequency adjustment device 27, which is operatively connected to switch 26.

Moreover, the number of times arm 4 has reached the first position is displayed on counter 11.

From an examination of the characteristics of testing system 1 according to the present invention, the advantages that can be attained therewith are evident.

In particular, since testing system 1 comprises an arm 4, which is alternately adapted to contact touchscreen 3 and is actuated by pneumatic actuation means 5, the electromagnetic interference due to testing equipment is minimized. In fact, arm 4 is not actuated by means of electromagnetic devices capable of perturbating the electromagnetic field required to carry out the tests and altering the test results.

Furthermore, testing system 1 allows qualification testing to be carried out under safe conditions. In fact, arm 4 is automatically actuated by pneumatic actuation means 5 and touchscreen 3 needs not be manually actuated by an operator. Accordingly, it is not necessary for any operator to be exposed to the electromagnetic radiation during the tests.

Moreover, since arm 4 is telescopic, actuation tip 6 is adapted to contact different regions of the active surface of touchscreen 3. As a result, touchscreen 3 can be actuated at different regions thereof without the need to move case 7 and/or electronic device 2 with respect to each other.

Since testing system 1 comprises switch 26, which is programmable to vary contact frequency f, the number of times arm 4 contacts touchscreen 3 in a given amount of time can be easily adjusted depending on the requirements of the qualification tests.

Furthermore, arm 4 is made of dielectric materials. Therefore, the interference of arm 4 with the electromagnetic radiation is minimized.

Finally, it is clear that modifications and variants can be made to the claimed testing system 1 without departing from the scope of the present invention.

In particular, testing system 1 might comprise more than one arm 4.

Furthermore, testing system 1 might comprise more than one actuation tip 6, preferably arranged at end 41 of arm 4.

## Claims

1. A testing system (1) for an electronic device (2) comprising a touchscreen (3); said testing system (1) comprising an arm (4), which is movable between at least a first position, in which it contacts and actuates, in use, said touchscreen (3) and a second position, in which it is spaced away from said touchscreen (3);
**characterized by** further comprising pneumatic actuation means (5), which are adapted to actuate said arm (4) between said first position and said second position.

2. The testing system of claim 1, **characterized in that** said arm (4) comprises, in turn, at least one actuation tip (6), which is integral with said arm (4) and is adapted to contact said touchscreen (3) when said arm (4) is, in use, in said first position;
said actuation tip (6) being adapted to exert, in use, an actuation force on said touchscreen (3) when said arm is, in use, in said first position.

3. The testing system of claim 2, **characterized in that** said testing system (1) further comprises:
- a case (7) at least partially housing said pneumatic actuation means (5); and
- a pivot (8), which is integral with said case (7) and is adapted to hinge said arm (4) relative to said case (7);
said arm (4) comprising, in turn, a first end (40), which is operatively connected to said pneumatic actuation means (5), and a second end (41) opposite to said first end (40);
said actuation tip (6) being fixed to said arm (4) at said second end (41).

4. The testing system of any one of the foregoing claims, **characterized in that** said pneumatic actuating means (5) comprise, in turn:
- a pneumatic actuator (20), which is operatively connected to said arm (4) and which is movable between a retracted position and an extended position; and
- a source (21) of compressed air fluidly connected with said pneumatic actuator (20) and adapted to supply said pneumatic actuator (20) with compressed air to move, in use, said pneumatic actuator (20) from said retracted position towards said extended position and/or vice versa.

5. The testing system of any one of the foregoing claims, **characterized by** further comprising a switch (26), which is programmable to vary, in use, a contact frequency (f) with which said arm (4) moves, in use, from said second position to said first position and/or vice versa in a given time interval.

6. The testing system of any one of the foregoing claims, **characterized by** further comprising elastic means, which are adapted to bias said arm (4) towards said second position.

7. The testing system of any one of the foregoing claims, **characterized in that** said arm (4) is made of a dielectric material.

8. The testing system of any one of claims 3 to 6, **characterized in that** said case (7) is made of a conductive material.

9. The testing system of any one of the foregoing claims, **characterized by** further comprising a counter (11), which is adapted to store and/or display, in use, the number of times said arm (4) switches, in use, from the first position to the second position and/or vice versa.

10. The testing system of any one of the foregoing claims, **characterized in that** said arm (4) is telescopic.
